# EUROPEAN PATENT SPECIFICATION

(11) **EP 0 367 304 B1**
(45) Date of publication and mention of the grant of the patent: **02.02.1994**
(21) Application number: 89123714.1
(22) Date of filing: 24.10.1986
(51) Int. Cl.: B65G 13/07, B65G 13/071, B65G 47/26

(54) **Control circuit for a wide range accumulator conveyor**
Regelkreis für einen Stauförderer mit weitem Anwendungsbereich
Circuit de réglage pour transporteur d'accumulation à grand domaine d'utilisation

(30) Priority: 12.11.1985 US 796866
(43) Date of publication of application: 09.05.1990
(62) Divisional of application: 86308303.6
(73) Proprietor: FIGGIE INTERNATIONAL INC. (Delaware Corporation), Willoughby Ohio 44094 (US)
(72) Inventor: Eaton, Daniel T., Louisville Kentucky 40204 (US); Benningfield, George, Louisville, Kentucky 40204 (US)
(74) Representative: Allen, Oliver John Richard

(56) References cited:
- EP-A- 0 095 857
- EP-A- 0 095 858
- US-A- 3 420 355
- US-A- 4 109 783
- US-A- 4 174 777
- US-A- 4 383 605
- US-A- 4 453 627

## Description

This invention relates to accumulator conveyors, and more particulary to control circuits for fluid controlled and actuated, belt driven, live-roller accumulator conveyors having multiple accumulation zones for accumulation of articles along the conveyor.

In article handling systems, it is frequently necessary to accumulate articles in an article pass line due to a downstream delay, an upstream surge, a desire for temporary storage, or for several other reasons. This has been accomplished in the past, by accumulator conveyors comprising a plurality of accumulation zones. Each zone includes a plurality of load carrying rollers and devices to start and stop rotation of such rollers, independently of the rollers of other zones, in response to control signals.

Typical past accumulator conveyors of this type are illustrated by EP-A-0095857, which corresponds to the pre-characterising portions of Claims 1 and 4, and take the form of belt driven, live-roller accumulation conveyors. In such conveyors, a single, common, drive belt is disposed beneath the rollers of each zone. Selected tension rollers, beneath the belt, are urged upwardly to force the portion of the belt underlying a specific zone against the load carrying rollers to drive them and any articles thereon. The tension rollers of each zone are raised and lowered independently of the tension rollers of other zones and are controlled by article sensors disposed in the zones. The actuators are typically disposed toward sides of the conveyor and lift one end of a tension roller, for example, to raise the belt. Thus, such tension rollers move from an inclined position towards a horizontal position as they are raised.

A fluid, such as compressed air, has been used to lift the tension rollers by means of air cylinders and as well as to provide pneumatic actuating control for such cylinders. For example, in one known conveyor, a normally closed control valve is mechanically held open by a spring, against the normal weight of a signal apparatus and the air pressure therein, thus passing pressurized air to an actuating cylinder to raise the tension rollers and belt in a zone to drive the zone. The control valve is closed upon sensing of an article by a sensing device, which mechanically overcomes the spring to close the valve, vent the cylinders and thus drop out the tension rollers permitting the zone to stop.

While such accumulation conveyors have provided many advantages, they also present a number of problems, not the least of which is versatility. Specifically, it is noted that the load carrying rollers of the various zones are driven by the frictional engagement of the belt against them. The tension rollers must urge the belt against the rollers with a force sufficient to drive them against their inherent inertia and friction, and the loads disposed on them by any articles thereon.

Moreover, such conveyors have relied on the same fluid pressures for actuation control. That is to say that the same fluid used to operate the actuators or cylinders is passed to them through the article operated control valves for each zone and according to the specific control circuit used.

When a normally closed control valve is used in such a conveyor, the force of the spring required to keep the valve in an open condition (so to effect zone drive) is proportional to the fluid pressure within the control valve. The spring must also be strong enough to hold up any sensing apparatus the normal weight of which is opposed by the valve actuating stem. Such sensing apparatus is typically heavy and may even involve use of a sensing roller of the same size and weight as a load carrying roller. Such heavier sensors in turn require heavier springs.

The fluid pressure within the control valve is substantially the same as that used in the actuator cylinders and thus is usually determined as a function of the anticipated conveyor loads. The pressure must be sufficient to cause fluid actuators to raise the tension rollers with enough force to press the belt against the load carrying rollers, causing enough frictional contact to drive the rollers under the anticipated loads.

Such a system substantially reduces the versatility of the accumulator in view of the fact that heavier loads require much greater fluid actuation pressures and resultant higher control pressures than do lighter loads. When an accumulator is set up to handle relatively heavy loads, for example, relatively high fluid pressures are required to initiate and maintain the belt drive contact. This also increases pressure in the control valves when they require more actuating force to operate the valves. When the conveyor is so set up, a light weight article does not possess enough inertia to trip the article sensor in a zone against such high pressures in the associated normally closed control valve. Specifically, the article cannot overcome the spring pressure necessary to hold the normally closed control valve open for zone driving against the relatively high fluid pressures in the valve being passed to the tension roller actuators for lifting the belt with enough force to drive the zones for heavy loads.

When the conveyor is set up for light loads, the air pressure required for effectively raising the tension rollers and belt is relatively light. Accordingly, air pressure in the control valve is also relatively light. Thus, a much lighter spring can be used to hold open the normally closed control valve. A heavy article would have no difficulty in tripping the article sensor against such a lighter spring. Nevertheless, the conveyor may not be able to convey such heavier loads in view of such lighter fluid pressures in the tension roller actuating cylinders, which pressure may not be sufficient to drive the belt with sufficient force against the load carrying rollers for moving the heavier load.

A typical complicating factor in such conveyors is the actual construction of the load sensors themselves, some of which are at great mechanical disadvantage with respect to sensed load pressures in view of the normally-closed control valves used. Moreover, many load sensors utilize roller and other structures having a great deal of internal friction and inertia which must be overcome by sensed articles. This detracts from the effective operational force conveyed articles can exert on the control valves, and at the same time requires increased drive actuator pressures. As noted herein, increased drive actuator pressures increase the fluid pressure in the control valves and even heavier balance springs are required to hold them open. This requires still greater article generated actuating forces and illustrates the compounding deleterious effect of undesirable friction inertia and overall poor mechanical advantage of the sensor device.

As in EP-A-0095857, there is provided by the present invention a fluid control and actuating circuit for an accumulator conveyor having a discharge zone and a plurality of accumulation zones, each zone having fluid actuated means for selectively driving the zone, comprising a fluid control valve in each zone, and a fluid actuator in each accumulation zone, each actuator in an accumulation zone including a shuttle valve having two input ports and an output port operably connected to an extensible piston for initiating driving of the zone, at least one input port of the shuttle valve of the respective actuator in each accumulation zone being connected to the fluid control valve in that zone and to an input port of a shuttle valve of the actuator in the next upstream zone, and the other input port of the shuttle valve of the corresponding actuator in an accumulation zone being connected at least to the fluid control valve in the respective downstream zone. The present invention is characterised in that the said fluid control valves comprise normally-open valves whereby the associated conveyor is operable to convey articles in the weight range of the lightest to the heaviest article of at least 0.45 Kg (1 lb) to 45 Kg (100 lbs).

The present invention also relates to a fluid control and actuating circuit for a belt driven live-roller accumulating conveyor as defined in independent Claim 4.

Such provides for an improved fluid controlled and actuated accumulator conveyor capable of handling a wide range of both heavy and light loads at a constant fluid pressure without adjustment.

In such a conveyor control circuit, fluid pressure flowing through the valve serves to retain the valve in a normally open condition and fluid passes to the tension roller actuating cylinders to effectuate driving of the associated zone. It is not necessary to use any external or load balancing spring to hold the valve open since the normal fluid pressure flowing through the valve serves this purpose.

In the preferred embodiment an article sensor is suitably provided in each zone having two light-weight, curved brackets, each secured to a nylon bearing supported pivot shaft at one bracket end upstream of a load carrying roller and extending beneath the roller and upwardly on its downstream side into an article pass line plane. A light-weight sensor roller comprising a relatively small diameter axle rod and a synthetic material roller rotatable thereon is connected between the upwardly extending bracket ends for engagement by any article moving along the conveyor pass line in the zone. A normally open control valve is mounted at the side of the conveyor and a control valve stem actuating paddle is mounted on the pivot shaft for engaging and depressing the stem and closing the normally open valve against the fluid pressure flowing therethrough. Preferably the straight line distance between the end of the brackets at the sensor roller and the pivot shaft axis is about twice or more the straight line distance between the pivot shaft axis and the point of engagement of the stem actuating paddle and the valve stem. This is made possible by the light-weight, curved brackets and provides a substantial effective mechanical advantage within the sensor over the control valve.

Zone tension rollers mounted centrally in the conveyor are preferably actuated by a centrally mounted fluid actuator, lifting the rollers horizontally and uniformly when actuated to present the belt horizontally and uniformly against the load carrying rollers of the zone and with no side-to-side inclination. The tension rollers are mounted on brackets secured to a pivot shaft and the fluid actuator drives a drive paddle, also secured to a shaft to rotate it and lift the tension rollers. The mechanical advantage of the actuator over the tension rollers, as provided by the drive paddle, shaft, and brackets, is also at least about 2 and maximizes the effectiveness of the actuator for a given actuation pressure.

Moreover, the preferred conveyor provides several other aspects of mechanical advantage over the entire conveying apparatus. For example, the use of very light-weight synthetic material as a rotatable sensor roller permits articles to roll over the sensor with little friction or other force opposition, thus not requiring increased drive force to move the articles. Also, the use of centrally mounted actuators and uniformly, horizontally-lifted tension rollers and belts maximizes the effectiveness of drive pressures exerted on the load carrying rollers for any given actuator pressure.

The commonly connected fluid control and actuating circuits are supplied by a single source of fluid pressure, such as compressed air. This pressure is controllably regulated, thus permitting the extensive versatile capacity range of the conveyor to be shifted up and down to accommodate a specific range of article weights.

While the normally open valve or the high mechanical advantage article sensor can be used independently to advantage in increasing the versatility of accumulator conveyor systems, the combination of them as described provides an accumulator conveyor of substantial load versatility. For example, a belt driven, live-roller, accumulator conveyor is capable of handling loads of about 45 Kg (100 pounds) in weight down to loads of about 0.45 Kg (1 pound) or less in weight, all without any adjustment to the fluid control and actuating pressure of about 2.8 x 10⁵ Newtons/m² (40 psi). Loads of from about 45 to 135 Kg (100 to about 300 pounds) can be conveyed and accumulated on the same conveyor without any adjustment or change except an increase in this pressure. The load versatility is also enhanced by the other mechanical advantages provided as noted.

The versatility of the conveyor according to the invention was demonstrated when a needle nose pliers, weighing less than 0.45 Kg (1 pound) was accidentally dropped on the conveyor being tested to accumulate and convey articles in the range of 18 and 22.5 Kg (40 and 50 pounds) to about 45 Kg (100 pounds). As the pliers were conveyed along the conveyor, they tripped the sensors, causing the zones to operate the same for them in accumulation and conveying as for the much heavier articles noted.

It is also to be appreciated that the actuating and control circuitry and components thereof have been greatly simplified over past conveyors in the reduction of pressure lines, components and interconnects. The conveyor contemplates utilization of a combined actuator and shuttle in at least all accumulation zones upstream of a discharge zone.

Tension rollers are advantageously mounted on second pivot shafts within each zone. A drive paddle, also connected to at least one such second pivot shaft, is rotated by an actuating cylinder to pivot the shaft for raising or dropping out the tension rollers. A load carrying roller brake is also connected to the same second pivot shaft and is pivoted forwardly when the shaft rotates to engage and brake the above load carrying roller when the tension roller drops out.

Other tension roller drive paddles in a zone are commonly interconnected so that operative engagement of one drive paddle by a cylinder controls them all. Also, in that way, the weight of each tension roller, together with forces generated by the weight of the belt and its adjusted tension, is translated to the brake on one of the second pivot shafts to increase braking effectiveness.

The invention will now be described, by way of example, with reference to the accompanying drawings, in which:-
Figure 1 is a diagrammatic illustrative sketch showing a conveyor in accordance with present invention, in one transient stage of accumulation,
Figure 2 is a schematic illustrating a control and actuating circuit for the conveyor of figure 1,
Figure 3 is an elevational view in partial cross-section of an accumulation zone of the conveyor of figure 1,and
Figure 4 is a plan view of the portion of the accumulation zone shown in figure 3.

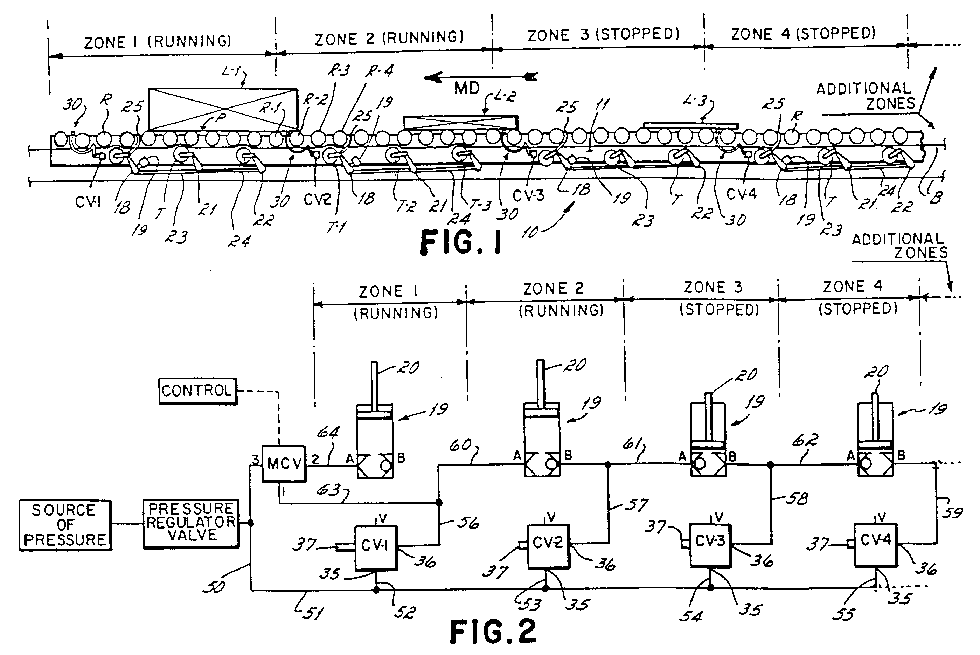

Turning now to the drawings, there is shown in figure 1 an accumulator conveyor 10 having a discharge zone 1 and a plurality of accumulation zones identified as zone 2, zone 3 and zone 4. Optional additional zones are referred to in the drawing but are not shown. The conveyor 10 is capable of conveying and accumulating various loads thereon, such as by way of example, loads L-1, L-2 and L-3.

It should be appreciated that the depiction of the conveyor 10 in figure 1 shows the conveyor in an illustrative transient condition only for the puroose of describing the conveyor structure and general overall operation. Many other configurations of article sizes, article disposition on the conveyor, and transient conditions are possible.

Each of the zones inlcudes a plurality of load carrying rollers designated by the letter R, with certain of the rollers designated as R-1 through R-4, as seen with respect to zone 2 for purposes of description.

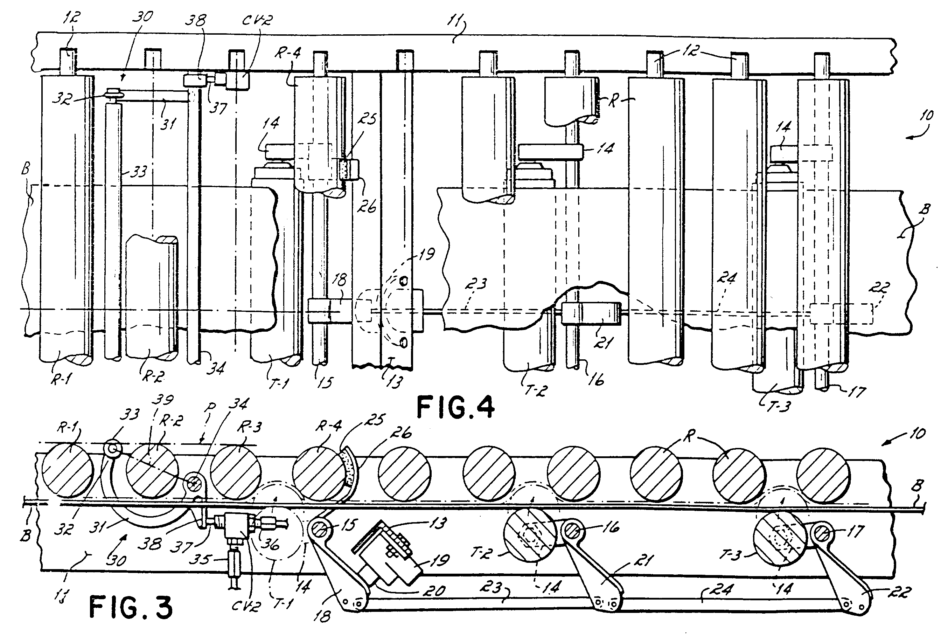

Figure 3 and 4 depict elevational and plan view of a single zone, such as zone 2, where further details of the conveyor are better seen. Other accumulation zones and the discharge zone are similar unless otherwise stated.

The conveyor 10 includes a plurality of channel-shaped side rails 11 (one of which is not shown), mounted in parallel disposition. A plurality of roller shafts 12, on whixh the various rollers are mounted for rotation, are disposed in parallel between the side rails 11. Preferably, the roller shafts 12 simply lie in slots in the side rails 11 of the conveyor such that the load carrying rollers can be moved upwardly off the conveyor if desired. The conveyor 10 further included at least one cross tie member 13 extending between the side rail 11 and the opposite side rail (not shown).

A plurality of tension rollers T are provided in each zone, with tension rollers T-1, T-2 and T-3 being shown in zone 2. A single common drive belt B is disposed in the conveyor between the lower surfaces of the load carrying rollers R and the upper surfaces of the tension rollers T. It will be appreciated that the belt is provided with appropriate drive and take-up or tensioning means (not shown) for driving (and adjusting the tension of) the belt in a direction opposite to the machine direction arrow MD as shown in figure 1. This motion of the belt tends to rotate the rollers R of the conveyor in a direction of rotation so as to convey loads in the machine direction, as indicated by the arrow MD in figure 1.

Each of the tension rollers T are mounted on tension roller brackets 14 which are themselves secured to tension roller pivot shafts 15, 16 and 17, as shown in Figs. 3 and 4.

When the pivot shafts 15, 16 and 17 of each zone are rotated in a clockwise direction, they serve to move the brackets 14 and thus uniformly raise or lift the tension rollers in parallel, horizontal disposition to the dotted line positions as shown in Fig. 3. This urges the belt B toward its dotted line position (Fig. 3) for full belt contact against the underside of the load carrying rollers in the zone to thereby drive the zone. The dotted line position of belt B is exaggerated in the figures for illustrative purposes and the actual belt path may not be quite so curved over the tension rollers.

When the tension rollers are lowered or dropped out, such as by counterclockwise rotation of the shafts 15, 16 and 17, the belt in the zone is lowered to its solid line position as shown in Fig. 3. In this lowered position, the belt B is out of engagement with the load carrying rollers of the zone and thus the zone is deactivated and not driven.

Further describing the tension roller construction of the conveyor zones, a drive paddle 18 is secured to the pivot shaft 15 such that when the drive paddle 18 is rotated, it imparts rotation to the shaft 15 and to the brackets 14. Attached to cross tie 13 is a fluid driven actuator 19, comprising a fluid driven, extensible piston 20, positioned to engage the drive paddle 18 such that upon extension of the piston 20, the drive paddle is urged in a clockwise direction. Upon retraction of the piston 20, the drive paddle is permitted to rotate in a counterclockwise direction, and is so urged by the weight of at least tension roller T-1. Accordingly, the extension of the piston 20 caused by fluid pressurization of the actuator 19, causes the drive paddle 18 and the pivot shaft 15 to rotate in a clockwise direction, thus raising the tension roller T-1 and urging the belt B upwardly against the rollers R-3, R-4 and other adjacent rollers in the zone.

Similarly, tension rollers T-2 and T-3 of each zone are mounted on the respective roller pivot shafts 16 and 17. Secured to the shafts 16, 17 are further drive paddles 21, 22, respectively, such that rotation of the drive paddles 21, 22 rotates respective pivot shafts 16, 17 and thus raises tension rollers T-2 and T-3 beneath the belt B to urge the belt B into engagement with further rollers R in the zone. This action drives the load carrying rollers so as to drive any loads thereon along a pass line plane P (as identified in Fig. 3) in the direction MD.

The drive paddles 10, 21 and 22 are interconnected by links 23 and 24. Accordingly, clockwise rotation of drive paddle 18 by extension of the piston 20 (shown in retracted condition in Fig. 3) serves to rotate not only the drive paddle 18, but the interconnected drive paddles 21 and 22 in a clockwise direction, thus rotating the shafts 15, 16 and 17 and raising all tension rollers T-1, T-2 and T-3 in the zone at the same time. Accordingly, and for purposes of description, the entire fluid actuator 19 and the drive paddles, associated pivot shafts and tension rollers in each zone are sometimes referred to collectively as fluid actuation means.

It will be noted that the distance between the point of engagement of the piston 20 of actuator 19 with drive paddle 18 to the axis of pivot shaft 15 is about twice the distance between the same axis and the axis of rotation of the tension roller. This provides a mechanical advantage in the drive of about 2, thus maximizing the effectiveness of the actuator 19 for a given actuation fluid pressure. Moreover, it should be appreciated that the drive advantage of tension rollers T-2 and T-3 is even greater due to the longer moment arm between the axis of shafts 16 and 17 and the engagement of links 23, 24 with drive paddles 21, 22, respectively. This further enhances drive pressures generated by the actuator 19 for a given actuator fluid pressure.

With further reference to figures 3 and 4, a zone brake comprising a brake shoe 25 and a brake arm 26 is also m ounted on the pivot shaft 15 for engagement with the roller R-4 upon retraction of the piston 20. A second brake shoe (not shown) may also be mounted on shaft 15 on the opposite side of the belt. Such retraction, when the actuator 19 is vented, permits the shaft 15 to rotate in a counterclockwise direction. In this function, when the actuator 19 is deactivated, the weight of the tension roller T-1, together with downward forces exerted on roller T-1 due to the adjusted tension on the drive belt and the weight of the belt, tends to rotate the pivot shaft 15 in a counterclockwise direction, lowering the belt B on the tension rollers away from the load carrying rollers and at the same time urging the brake arm 26 and the brake shoe 25 toward and into engagement with the roller R-4, thus frictionally braking that roller and any load which may reside thereon.

It will be appreciated that the brake, including the shoe 25 and arm 26, is disposed on the upstream side of the roller R-4 and extends preferably to just below the pass line plane P, as shown in figure 3. It will also be appreciated that when the piston 20 of the actuator 19 is retracted, each of the tension rollers T-1, T-2 and T-3 are free to rotate downwardly or in a counterclockwise direction. The weight of each (and belt pressure thereon) is interconnected through the links 23 and 24 and serves to increase the frictional braking pressure exerted by the brake 25 against the roller R-4.

Figs. 3 and 4 also depict an article sensing means and a control valve for each zone. The article sensing means 30 preferably includes two curved brackets 31 (one not shown), each having an upper end at 32. The two curved brackets are disposed one on each side of the conveyor, within the side rails 11, and are mounted on a pivot shaft 34, which has ends mounted in nylon bearings at the conveyor sides to reduce rotating friction.

The curved brackets 31 extend from the pivot shaft 34 beneath the load carrying roller R-2 and then extend upwardly between the rollers R-1 and R-2 into a position adjacent or within the pass line plane P, as shown in Fig. 3. An axle of small diameter, about 6.5 mm (¼") (not referenced) is mounted between the ends 32 of the brackets 31 and a light-weight sensor roller 33 is rotatably disposed on the axle within or above the pass line plane P so as to be engaged by articles moving down the conveyor. Sensor roller 33 is preferably made from a light-weight synthetic material such as polystyrene.

A normally open control valve is provided within each zone, with each respective identical control valve referred to as CV-1, CV-2, CV-3 and CV-4, respectively. Fiture 3 depicts a control valve CV-2 shown mounted on the side rail 11 of the conveyor in zone 2. The control valve CV-2 is a normally open valve having an input 35 directly connected to a source of pressurized fluid, and an output 36 connected to the actuators 19, as will be described.

The control valves are all constructed as normally open valves and each has an extending valve actuating stem 37 which can be depressed to close the normally open valve. In a normal condition, the stem 37 is held in an extended position by air flowing through the open control valve CV-2. Depression of the stem 37 causes the control valve to close, thereby cutting off pressurized fluid present at input 35, from passage through the valve to output 36.

Also secured to the pivot shaft 34 is a control valve stem actuating paddle 38 which rotates upon rotation of shaft 34. Accordingly, it will be appreciated that when the sensor roller 33 is engaged by an article moving down the pass line P of the conveyor, the curved brackets 31 are depressed to rotate the shaft 34 in a counterclockwise direction. This motion moves the stem actuating paddle 38 in a counterclockwise direction, thereby depressing the stem 37 and closing the respective control valve.

It will be appreciated that the sensing means 30 provides a significant mechanical advantage of the article over the control valve. Specifically, it will be appreciated that a straight line 39, extending from approximately the end 32 of the bracket 31 to the axis of the pivot shaft 34, is about twice the distance from that same axis to the point of engagement of the actuating paddle 38 with the stem 37. This provides a mechanical advantage of about 2 with respect to the article over the control valve. Obviously, other constructions could be provided of substantially more mechanical advantage to further facilitate actuation of the control valve, or of less mechanical advantage depending on the parameters desired. In any event, it is unnecessary to overcome any external spring pressure, as in a system using a normally closed valve. The only valve actuating pressure required is that necessary to close the normally open valve against the pressure of air flowing therethrough (and a small amount of pressure to overcome any internal spring bias of the plunger toward its open position). And that required pressure may vary substantially depending on specific valve construction, it being preferable to select a normally open control valve having the operational capacity to handle the fluid pressure necessary for the tension roller actuators in view of the expected loads, but a control stem extension force caused by such pressure sufficient only to extend the sensing means 30 into the conveyor pass line. As an example, in a prototype capable of handling packages of from about 0.45 Kg (1 pound) or less to about 135 Kg (300 pounds), a control valve Model No. MJVO-3, a two-position, three-way, normally open valve produced by Clippard Instrument Laboratory, Inc. of Cincinnati, Ohio has been found suitable. Such a valve is capable of handling the actuating pressures of about 2.8 x 10⁵ Newtons/m² (40 psi) as noted herein for anticipated article loads of from less than about 0.45 Kg (1 pound) up to about 45 Kg (100 pounds). The valve is also capable of handling increased control pressures of about 4.1 x 10⁵ Newtons/m² (60 psi) (for example) required for article loads up to about 135 Kg (300 pounds).

This specific valve includes an internal valve spring providing a relatively weak force to extend the valve stem to a normally open position when the valve stem is not loaded by extraneous forces. The internal spring is a standard item in such a preferred valve, but is not strong enough to extend the plunger against the inherent weight of the article sensor of the invention described herein, even when there is no article load on the sensor. The preferred sensor and valve apparatus then is preferably designed for operation despite the existence or non-existence of such spring, and such spring does not comprise a load balance spring with respect to either sensor weight or fluid flow pressure in the valve.

Other normally open type valves may suffice.

Turning now to Fig. 2, the control and actuation circuit of the conveyor will be described. As shown in Fig. 2, a source of fluid pressure, such as a source of compressed air, is provided and is regulated by a pressure regulator valve connected to a supply manifold 50. Supply manifold 50 is connected to a pressure line or manifold 51 which is interconnected through lines 52, 53, 54 and 55, respectively, to the input port 35 of each control valve CV-1 through CV-4. Each control valve has a vent, marked V in the drawing, and a pressurized fluid output 36 connected to respective lines 56, 57, 58 and 59. In the zones 2 through 4, the actuators 19 are provided with two input ports A and B and a shuttle ball for sealing off one of the two input ports. In zone 1, which is the discharge zone, the actuator 19 may also have two ports A and B provided with a shuttle ball, however, port B is vented or is closed preferably as shown. Alternatively, port B of the actuator 19 in zone 1 could be connected to the line 60. In zones 2 and 3, port B of the respective actuators 19 are connected through the respective lines 61 and 62 to the A ports of the immediate upstream actuators. Port B of the actuator 19 in zone 4 is connected only to line 59 and control valve CV-4, or to a port A of another actuator 19 in an optional upstream zone (not shown).

The specific actuator 19 preferred for use constitutes a 13 mm (½") stroke air clamp, Model No. lOlS, produced by the EVEI Development Co. Inc. of Jeffersontown, Kentucky. Such an actuator comprises an extensible piston, fluid driven cylinder, combined with an integral shuttle valve, as shown schematically in Fig. 2, and connected together as shown in the drawing and described above. The extensible pistons 20 of each actuator are extended to engage the drive paddles 18 in each of the respective zones 1-4.

Continuing further with a description of the control and actuation of Fig. 2, manifold 50 in addition to its connection to line 51 is connected to an input port 3 of a master control valve MCV. The master control valve has also an input port 1 and an output port 2 and can be controlled by any desirable means to selectively connect either the input port 3 with the output port 2, or the input port 1 with the output port 2.

When input port 3 of the master control valve MCV is connected to the output port 2, fluid such as compressed air flows from the source of pressure through the pressure regulator valve, into the manifold 50, through the master control valve, ports 3 and 2, to port A of the actuator 19 in zone 1. Such pressurized air is operable to extend the piston 20 in zone to continuously engage the drive paddle 18 of zone 1 and thereby elevate the tension rollers of that zone upwardly so as to press the belt B against the load carrying rollers of that zone and thus continuously drive the zone to move loads thereon in the direction of the arrow MD (Fig. 1), despite the condition of control valve CV-1 in zone 1.

When the MCV valve is controlled to connect input port 1 to input port 2, the actuator 19 of zone 1 is effectively connected to the control valve CV-1 for that zone through lines 56, 63 and 64. In this mode, the zone 1 will be actuated or driven only when the sensor 30 is extended into the pass line P. When the sensor 30 is, depressed, the normally open valve CV-1 will be closed to vent the actuator 19 in zone 1, deactivating the zone.

Operation of the conveyor will now be described with reference to the varying loads L-1, L-2 and L-3 thereon, as shown in Fig. 1, and the position of the respective components as shown in Fig. 2. First, however, it will be appreciated that for zones 2, 3 and 4 the actuators 19 can be extended so as to drive the tension rollers upwardly and thus drive the zones when ever the control valve in the zone, or the control valve in the preceding downstream zone has its plunger 37 extended. This could occur whenever two respective loads have not depressed both the sensor 30 of the zone and of the downstream zone, respectively. For example, the actuator 19 of zone 2 is operated to extend piston 20 when pressure is presented to the actuator through either port A from control valve CV-1 or through port B from control valve CV-2. Accordingly, zone 2, for example, will be activated to drive any loads thereon when either valve CV-1 or CV-2 is in its normally open condition. Likewise, and for example, zone 3 could be activated upon the presence of any pressure at either port A, through control valve CV-2 or port B through control valve CV-3.

Looking now at the specific condition of the conveyor as shown in Figs. 1 and 2, it will be appreciated that the master control valve MCV is positioned so as to connect input port 3 with output port 2, thus pressurizing the line 64 and port A of actuator 19 so as to constantly extend the piston 20 thereof regardless of the condition of the control valve CV-1. This insures continuous operation of the conveyor in a singulation mode, i.e., a mode wherein operation of zones 2 through 4 by the described control serves to separate loads discharging into and from zone 1.

As shown in Figs. 1 and 2, a load L-1 has substantially traversed zone 1, but still remains partially on the sensor 30 of zone 2. This depresses the stem 37 of the control valve CV-2 to move the valve from its normally open to a closed position, thereby venting, through the vent V, any pressure in lines 61, 57, and output 36. At the same time, the control valve CV-1 remains normally open since the load L-1 has not reached the sensor 30 of the discharge zone 1. (Even if the sensor 30 of zone 1 were depressed, that zone would still run due to the override of the master control valve over valve CV-1.)

In this condition, then, the control valve CV-1 is operable to pass pressure from the manifold line 51 through its output 36 and lines 56 and 60 to port A of the actuator 19 of zone 2. This pressure extends the piston 20 so as to drive the drive paddle 18 for the tension rollers T-1 through T-3 in zone 2 and thereby lift all the tension rollers in that zone as heretofore described so as to drive zone 2.

Moving upstream, a load L-2 has substantially traversed zone 3, but still remains on the actuator for zone 3. This depresses the stem 37 of the control valve CV-3 and vents lines 58 and 62. At the same time, the load L-1 has not cleared the sensor 30 of zone 2, thereby also causing depression of the stem 37 of the control valve CV-2 which causes the valve to vent lines 57 and 61. Accordingly, no pressure is directed to the actuator 19 of zone 3 and the piston 20 can be retracted. This permits the drive paddle 18 to move in a counterclockwise direction in zone 3, thereby dropping out the tension roller in that zone and all the commonly connected tension rollers. It will be appreciated that the weight of the tension rollers, combined with forces exerted by the belt, depresses piston 20 of actuator 19 in the zone.

Moving still further upstream, it will also be appreciated that a load L-3 has moved substantially through zone 4, but still depresses the sensor 30 of zone 4. Accordingly, the stem 37 of the control valve CV-4 is depressed, venting any pressure in the line. At the same time, since the load L-2 has not cleared the sensor 30 of zone 3, lines 58 and 62 remain vented and no pressure is available at the actuator 19 of zone 4. Thus, zone 4 tension rollers are dropped out and the zone is disengaged. Accordingly, in the condition as shown in Fig. 1, zones 1 and 2 are running or activated while zones 3 and 4 are temporarily stopped or deactivated. Load L-3 on the stopped conveyor zones 3 and 4 is thus accumulated and spread out from other loads. It will not be moved until zone 3 is again activated. This insures the loads are spaced or "singulated" as they move along the zones.

As soon as the load L-1 clears the sensor 30 in zone 2, air pressure in the control valve CV-2 will serve to extend the piston 37 against the freed sensor in that zone, lifting it, and the control valve CV-2 will return to its normal open condition, thereby pressurizing output 36, and lines 57 and 61. This will insure the engagement, through pressure exerted on port A of the actuator 19 in zone 3, so that the actuator will operate the tension rollers to lift the belt into engagement with the rollers R in zone 3. This will drive the load L-3 deeper into zone 3. Once the load L-3 clears the sensor 30 of zone 4, the control valve CV-4 will extend to its normal condition, thereby pressurizing its output 36, line 59 and port B of the actuator 19 in zone 4. This will drive zone 4 to convey any further packages received from either an upstream conveyor or an upstream accumulator conveyor or zone as appropriate.

Accordingly, it will be appreciated that the operation of any of the zones is contingent upon the condition of the immediate downstream zone as well as the condition of the zone in question.

When it is necessary to fully accumulate loads on the conveyor, a load stop is provided in the pass line P of the conveyor so as to stop an article over the sensor 30 of zone 1. At the same time, the master control valve is operated to connect the input port 1 with output port 2 such that any pressure to extend the piston 20 of the actuator 19 of the discharge zone 1 must be obtained through the control valve CV-1. Since any load on zone 1 under that condition, however, depresses the stem 37 of the control valve CV-1, there will not be any pressure and that zone will remain disengaged until the package is manually moved from the conveyor or the master control valve is switched to connect port 3 with port 2. At the same time a package stop, for example, is removed.

Also, it will be appreciated that as soon as the tension rollers of any zone are dropped out by virtue of the above described operation, the brake shoe 25 and brake arm 26 is rotated by counterclockwise rotation of the shaft 15 in each zone so as to brake a roller such as roller R-4 in zone 2. This prevents any load from coasting through the zone onto the next zone. Of course, it will be appreciated that the sensors and the brake can be disposed in various positions throughout the respective zone so as to achieve any desired braking function. Moreover, it will be appreciated that the weight of the tension rollers, coupled with forces exerted by the tensioned drive belt, serves to provide adequate braking pressures.

Thus, an article accumulates in zone 1, which stops, a following article moves through zone 2 to its sensor, deactivating and braking the zone, a further article moves into zone 3, stopping and braking it, and so on, upstream of the conveyor. The articles thus accumulate in a "zero-pressure" mode without exerting significant pressure on each other.

It will also be appreciated that loads L-1, L-2 and L-3 vary substantially in dimension and in weight. The conveyor 10 is capable of handling loads, such as load L-1, at approximately 45 Kg (100 pounds) and as well is capable of handling much lighter loads such as load L-3 which may be much smaller in dimension and weigh as little as 0.45 Kg (1 pound) or less. Also, the conveyor 10 is capable of handling intermediate weight (between 0.45 and 45 Kg) (1 and 100 pounds) and dimension loads, such as load L-2 as shown in Fig. 1.

Conveying and accumulating of articles in this range can be accomplished upon a control and actuating pressure of about 2.8 x 10⁵ Newtons/m² (40 psi) and without any adjustment. Loads above 45 Kg (100 pounds) to about 135 Kgms (300 pounds) are conveyed and accumulated in the same way by virtue of making only an adjustment to the control and actuating pressure, through preferably a single adjustable pressure regulator, and with no other adjustment to the apparatus, control valves or actuators therefor.

It will also be appreciated that the significant mechanical advantage provided by the sensor 30 enables the depression and actuation of the control valves in each zone by articles varying widely in weight, as mentioned. The combination of the mechanical advantage, together with the utilization of the normally open valve (as opposed to a normally closed valve which is mechanically held open until actuated for closing), is believed to provide this desirable function. While it may be possible to achieve some broadening of a load range in an accumulator conveyor by the mere use of the improved mechanical advantage sensor 30, or by the use of normally open control valve as described herein, a combination of these two components provides an even more beneficial and improved result, enabling the conveyor to handle packages of widely varying weight characteristics without any adjustment of the air pressure.

While the mechanical advantage of the sensor, roller and bracket apparatus has been described, it should also be appreciated that it is obtained without interference from the load carrying rollers, due to use of the curved brackets extending from behind and beneath one load carrying roller to the front thereof. Accordingly, this advantage can be provided in conveyors independent of the load carrying roller centers.

Also, it should be appreciated that the conveyor 10 incorporates several other mechanical advantages, in addition to that provided by the effective movement arms of the sensor brackets and valve stem actuating paddle. Use of a rotatable synthetic sensor roller reduces frictional forces which must be overcome as the article trips and rides over the sensor. Central disposition of the tension rollers, coupled with the centrally disposed actuator and uniform, parallel and horizontal lifting motion by them, insures full drive belt contact with the load carrying rollers to maximize the drive force imparted for any given actuator pressure, thus most efficiently using the predetermined control and actuator fluid pressure to handle heavier loads.

Still further, the significant mechanical advantage provided by the actuators over the tension rollers through the respective drive paddles 21, 22 and interconnecting links 23, 24, further enhances the capacity of the actuators for a given fluid actuation pressure, thereby increasing drive pressures and serving to broaden the effective load range of the conveyor for a given fluid control and actuating pressure.

It should also be appreciated that the conveyor 10 has been described with respect to handling loads which vary from about 0.45 Kg (1 pound) or less up to about 45 Kg (100 pounds). Adjustment of the air pressure through the pressure regulator valve, for example, enables the conveyor to handle a similarly wide range of loads, but in higher magnitude, such as loads up to about 135 Kg (300 pounds), as noted, and with no other adjustment.

Accordingly, the accumulator conveyor 10 is capable of handling widely varying load weights, including loads of weights varying from about 0.45 Kg (1 pound) or less up to about 45 Kg (100 pounds), all without any pressure adjustment, even though the same pressure is utilized for both fluid control and fluid actuation of the respective zones of the conveyor. Loads of up to 135 Kg (300 pounds) can be handled in the same way with only adjustment of the common control and actuating pressure being necessary. No different control valves or actuators are required. The conveyor 10 also provides an improved brake, actuated in part by the weight of all dropped out tension rollers in a zone.

## Claims

1. A fluid control and actuating circuit for an accumulator conveyor (10) having a discharge zone (ZONE 1) and a plurality of accumulation zones (ZONE 2, 3, etc.), each zone having fluid actuated means (19, 20) for selectively driving the zone, comprising a fluid control valve (CV) in each zone, and a fluid actuator (19) in each accumulation zone, each actuator in an accumulation zone including a shuttle valve having two input ports (A and B) and an output port operably connected to an extensible piston (20) of said fluid actuated means for initiating driving of the zone, at least one input port (B) of the shuttle valve of the respective actuator (19) in each accumulation zone being connected to the fluid control valve (CV) in that zone and to an input port (A) of a shuttle valve of the actuator (19) in the next upstream zone, and the other input port (A) of the shuttle valve of the corresponding actuator (19) in an accumulation zone being connected at least to the fluid control valve (CV) in the respective downstream zone characterised in that the said fluid control valves (CV) comprise normally-open valves whereby the associated conveyor is operable to convey articles in the weight range of the lightest to the heaviest article of at least 0.45 Kg (1 lb) to 45 Kg (100 lbs).

2. A fluid control and actuating circuit as claimed in Claim 1 further including a source of pressurized fluid, a fluid pressure regulator, a fluid actuator (19) in the discharge zone (ZONE 1), and a master control valve (MCV), the latter having an output port (2), first and second input ports (3 and 1) and means (CONTROL) for selectively, exclusively connecting either its first or its second input port to its output port, its said first input port (3) being connected to the pressure regulator, its said second input port (1) being connected to a normally-open control valve (CV-1) in the discharge zone, and its said output port (2) being connected to an input port (A) of the fluid actuator (19) in the discharge zone.

3. A fluid control and actuating circuit as claimed in either Claim 1 or Claim 2 including respective means (30) for sensing articles in each zone, and wherein operation of the respective sensing means in a zone closes the normally-open fluid control valve (CV) in the zone against pressure of fluid therein.

4. A fluid control and actuating circuit for a belt driven, live-roller accumulating conveyor (10) having a drive belt (B), a plurality of belt driven, load carrying rollers (R) disposed in a plurality of selectively driven accumulation zones (ZONES 2, 3, 4 etc.) defining a common article pass line, and tension rollers (T) for selectively urging said belt into engagement with load carrying rollers of respective zones, said circuit comprising:
a fluid control valve (CV2, CV3, CV4 etc.) operatively associated with each zone;
a fluid-driven actuator means (18, 19, 20-24) in each zone for selectively urging said belt into engagement with load carrying rollers in each zone;
integrated fluid circuit means (50-55) operating on a common fluid pressure from a single pressurized fluid source and operatively interconnecting said fluid control valves and said fluid driven actuator means; and an article sensor (30) in each zone,
characterised in that the article sensor includes a pivot shaft (34) between two load-carrying rollers (R2, R3), a curved bracket (31) mounted on said shaft and extending from said pivot shaft between two load carrying rollers around one of said rollers and upwardly into said pass line from beneath said one load carrying roller (R2), a paddle (38) mounted on said pivot shaft for operably engaging a respective fluid control valve (CV1-4 etc.) and actuating it when an article in said pass line rotates said bracket and said shaft, said bracket, pivot shaft and paddle providing a mechanical advantage of at least about 2 with respect to operation of said valve by said article, each zone being provided with braking means (25, 26) for selectively engaging at least one load carrying roller, the said fluid control valve (CV1-4 etc.) in each zone being a normally-open fluid control valve and the conveyor being operable to convey articles having a weight range of the lightest to the heaviest article of at least 0.45 Kg (1 lb) to 45 Kg (100 lbs).

5. A fluid control and actuating circuit according to any preceding claim
characterized in that the fluid actuator (19) and said normally-open valve (CV) in each zone are respectively interconnected with a common energy system operating at a common predetermined energy level and being selectively operable at a single common predetermined energy level to convey and to accumulate a plurality of discrete articles which may vary in weight within the said weight range.

6. A fluid control and actuating circuit as in Claim 5 wherein said common energy system is a common fluid pressure system (50,51).

7. A fluid control and actuating circuit as in Claim 6 wherein each of said normally-open fluid control valves (CV1-4 etc.) has a predetermined system inertia generated in part by said common fluid pressure and each is operated against said respective inertia by each of said discrete articles (L) moving along the conveyor regardless of its weight.

8. A fluid control and actuating circuit as in Claim 7 wherein said common fluid pressure is a function of the weight of the heavier articles conveyed and accumulated.

## Patentansprüche

1. Flüssigkeits-Steuer/Regel- und -Betätigungskreis für einen Stauförderer (10) mit einer Entladungszone (ZONE 1) und mehreren Stauzonen (ZONE 2, 3 etc.), von denen jede Zone mit flüssigkeitsbetätigten Einrichtungen (19, 20) zum selektiven Treiben der Zone versehen ist, mit einem Flüssigkeitssteuerventil (CV) in jeder Zone und einem Flüssigkeitsstellorgan (19) in jeder Stauzone, wobei jedes Stellorgan in einer Stauzone ein Wechselventil mit zwei Einlässen (A und B) und einem mit einem ausfahrbaren Kolben (20) der flüssigkeltsbetätigten Einrichtung verbundenen Auslaß aufweist, um den Antrieb der Zone einzuleiten, wobei mindestens der eine Einlaß (B) des Wechselventils des zugehörigen Stellorgans (19) in jeder Stauzone an das Flüssigkeitssteuerventil (CV) in dieser Zone und an einen Einlaß (A) eines Wechselventils des Stellorgans (19) in der nächsten stromaufwärts gelegenen Zone angeschlossen Ist und der andere Einlaß (A) des Wechselventils des zugehörigen Stellorgans (19) in einer Stauzone mindestens an das Flüssigkeitssteuerventil (CV) in der zugehörigen stromabwärts gelegenen Zone angeschlossen ist,
dadurch gekennzeichnet, daß die Flüssigkeitssteuerventile (CV) normalerweise geöffnete Ventile umfassen, wodurch der zugehörige Förderer in der Lage ist, Gegenstände im Gewichtsbereich vom leichtesten bis zum schwersten Gegenstand von mindestens 0,45 kg (1 lb) bis 45 kg (100 lbs) zu fördern.

2. Flüssigkeits-Steuer/Regel- und -Betätigungskreis nach Anspruch 1, welcher ferner eine Quelle von unter Druck stehender Flüssigkeit, einen Flüssigkeitsdruckregler, ein Flüssigkeitssteilorgan (19) in der Entladezone (ZONE 1) und ein Führungssteuerventil (MCV) mit einem Auslaß (2), ersten und zweiten Einlässen (3 und 1) und einer Einrichtung (CONTROL) zum selektiven, ausschließlichen Anschluß entweder seines ersten oder seines zweiten Einlasses an seinen Auslaß umfaßt, wobei sein erster Einlaß (3) am Druckregler, sein zweiter Einlaß (1) an einem normalerweise geöffneten Steuerventil (CV-1) in der Entladezone und sein Auslaß (2) an einem Einlaß (A) des Flüssigkeitsstellorgans (19) in der Entladezone angeschlossen ist.

3. Flüssigkeits-Steuer/Regel- und -Betätigungskreis nach Anspruch 1 oder Anspruch 2, welcher eine entsprechende Einrichtung (30) zur Erfassung der Gegenstände in jeder Zone aufweist und bei welchem der Betrieb der entsprechenden Erfassungseinrichtung in einer Zone das normalerweise geöffnete Flüssigkeitssteuerventil (CV) in der Zone gegen den Druck der darin befindlichen Flüssigkeit schließt.

4. Flüssigkeits-Steuer/Regel- und -Betätigungskreis für einen riemengetriebenen Walzen-Stauförderer (10) mit einom Antriebsriemen (B), mehreren riemengetriebenen Förderwalzen (R), die in mehreren selektiv angetriebenen Stauzonen (ZONEN 2, 3, 4 etc.) angeordnet sind, die eine gemeinsame Weglinie für die Gegenstände bilden, und Spannwalzen (T), die selektiv den Riemen in Eingriff mit den Förderwalzen der zugehörigen Zonen drücken, wobei die Schaltung umfaßt:
ein Flüssigkeitssteuerventil (CV2, CV3, CV4 etc.), das jeder Zone zugeordnet ist;
eine flüssigkeitsgetriebene Stelleinrichtung (18, 19, 20 bis 24) in jeder Zone, um den Riemen in Eingriff mit den Förderwalzen in jeder Zone zu drücken;
eine integrierte Flüssigkeitskreiseinrichtung (50 bis 55), die auf einen gemeinsamen Flüssigkeitsdruck von einer einzigen Quelle von unter Druck stehender Flüssigkeit arbeitet und die Flüssigkeitssteuerventile mit der flüssigkeitsgetriebenen Stelleinrichtung koppelt;
und einen Gegenstandssensor (30) in jeder Zone;
dadurch gekennzeichnet, daß der Gegenstandssensor eine Drehwelle (34) zwischen zwei Förderwalzen (R2, R3), eine gekrümmte Klammer (31), die auf der Welle befestigt ist und sich von der Drehwelle zwischen zwei Förderwalzen um eine dieser Walzen herum und nach oben in die Weglinie von unterhalb dieser einen Förderwalze (R2) erstreckt, einen Arm (38) aufweist, der an der Drehwelle befestigt ist, mit einem zugehörigen Flüssigkeitssteuerventil (CV1 bis 4 etc.) in Eingriff gelangt und es betätigt, wenn ein Gegenstand in der Weglinie die Klammer und die Welle dreht, wobei die Klammer, die Drehwelle und der Arm einen mechanischen Gewinn von mindestens etwa 2 gegenüber dem Betrieb des Ventils durch den Gegenstand bewirken, wobei jede Zone mit einer Bremseinrichtung (25, 26) für einen selektiven Eingriff mit mindestens einer Förderwalze versehen ist, wobei es sich beim Flüssigkeitssteuerventil (CV1 bis 4 etc.) in jeder Zone um ein normalerweise geöffnetes Flüssigkeitssteuerventil handelt und der Förderer in der Lage ist, Gegenstände in einem Gewichtsbereich vom leichtesten bis zum schwersten Gegenstand von mindestens 0,45 kg (1 lb) bis 45 kg (100 lbs) zu fördern.

5. Flüssigkeits-Steuer/Regel- und -Betätigungskreis nach einem Vorangegangenen Anspruch,
dadurch gekennzeichnet, daß das Flüssigkeitsstellorgan (19) und das normalerweise geöffnete Ventil (CV) in jeder Zone jeweils an ein gemeinsames Energiesystem angeschlossen sind, das auf einem gemeinsamen vorbestimmten Energiepegel arbeitet und selektiv auf einem einzigen gemeinsamen vorbestimmten Energiepegel arbeitet, um mehrere diskrete Gegenstände zu fördern und zu sammeln, die in ihrem Gewicht innerhalb des Gewichtsbereiches variieren.

6. Flüssigkeits-Steuer/Regel- und -Betätigungskreis nach Anspruch 5, bei welchem es sich beim gemeinsamen Energiesystem um ein gemeinsames Flüssigkeitsdrucksystem (50, 51) handelt.

7. Flüssigkeits-Steuer/Regel- und -Betätigungskreis nach Anspruch 6, bei welchem jedes normalerweise geöffnetes Flüssigkeitssteuerventil (CV1 bis 4 etc.) eine vorbestimmte Systemträgheit hat, das zum Teil vom gemeinsamen Flüssigkeitsdruck erzeugt wird, und gegen die jeweilige Trägheit arbeitet, indem sich jeder diskrete Gegenstand (L) entlang des Förderers ohne Rücksicht auf sein Gewicht bewegt.

8. Flüssigkeits-Steuer/Regel- und -Betätigungskreis nach Anspruch 7, bei welchem der gemeinsame Flüssigkeitsdruck eine Funktion des Gewichtes der geförderten und gestauten schwereren Gegenstände ist.

## Revendications

1. Circuit de commande et d'actionnement à fluide pour un convoyeur-accumulateur (10) comportant une zone de décharge (ZONE 1) et une pluralité de zones d'accumulation (ZONES 2, 3, etc.), chaque zone comportant un dispositif actionné par fluide (19, 20) pour entraîner sélectivement la zone, comprenant une valve de commande à fluide (CV) dans chaque zone, et un actionneur à fluide (19) dans chaque zone d'accumulation, chaque actionneur dans une zone d'accumulation comprenant une valve à navette comportant deux lumières d'entrée (A et B) et une lumière de sortie reliée activement à un piston extensible (20) du dispositif actionné par fluide pour amorcer l'entraînement de la zone, au moins une lumière d'entrée (B) de la valve à navette de l'actionneur (19) respectif dans chaque zone d'accumulation étant raccordée à la valve de commande à fluide (CV) dans cette zone et à une lumière d'entrée (A) d'une valve à navette de l'actionneur (19) situé dans la zone suivante vers l'amont, et l'autre lumière d'entrée (A) de la valve à navette de l'actionneur (19) correspondant dans une zone d'accumulation étant raccordée au moins à la valve de commande à fluide (CV) dans la zone respective située en aval, caractérisé en ce que les valves de commande à fluide (CV) comprennent des valves normalement ouvertes, le transporteur associé pouvant être mis en oeuvre pour transporter des objets dans la fourchette de poids allant du plus léger au plus lourd, à savoir d'au moins 0,45 kg (1 livre) à 45 kg (100 livres).

2. Circuit de commande et d'actionnement à fluide suivant la revendication 1, comprenant, en outre, une source de fluide sous pression, un régulateur de pression de fluide, un actionneur à fluide (19) dans la zone de décharge (ZONE 1), et une valve de commande principale (MCV), cette dernière comportant une lumière de sortie (2), une première et une seconde lumière d'entrée (3 et 1) et un dispositif (COMMANDE) pour raccorder sélectivement et exclusivement sa première lumière d'entrée ou sa seconde lumière d'entrée à sa lumière de sortie, sa première lumière d'entrée (3) étant raccordée au régulateur de pression, sa seconde lumière d'entrée (1) étant raccordée à une valve de commande normalement ouverte (CV-1) dans la zone de décharge, et sa lumière de sortie (2) étant raccordée à une lumière d'entrée (A) de l'actionneur à fluide (19) dans la zone de décharge.

3. Circuit de commande et d'actionnement à fluide suivant la revendication 1 ou 2, comprenant un dispositif respectif (30) pour détecter des objets dans chaque zone et dans lequel l'actionnement du dispositif de détection respectif dans une zone ferme la valve de commande à fluide normalement ouverte (CV) dans la zone à l'encontre de la pression de fluide qui y règne.

4. Circuit de commande et d'actionnement à fluide pour un convoyeur-accumulateur à rouleaux dynamiques (10) entraîné par bande comportant une bande d'entraînement (B), une pluralité de rouleaux porteurs (R) entraînés par bande disposés dans une pluralité de zones d'accumulation entraînées sélectivement (ZONES 2, 3, 4, etc.), définissant une ligne commune de passage des objets, et des rouleaux tendeurs (T) pour solliciter sélectivement la bande en contact avec des rouleaux porteurs de zones respectives, le circuit comprenant :
une valve de commande à fluide (CV-2, CV-3, CV-4, etc.), associée activement à chaque zone;
un dispositif actionneur entraîné par fluide (18, 19, 20-24) dans chaque zone pour solliciter sélectivement la bande en contact avec des rouleaux porteurs dans chaque zone;
un circuit à fluide intégré (50-55) alimenté par une pression de fluide commune provenant d'une source de fluide sous pression unique et raccordant activement les valves de commande à fluide et les actionneurs entraînés par fluide;
et un détecteur d'objet (30) dans chaque zone,
caractérisé en ce que le détecteur d'objet comprend un axe-pivot (34) entre deux rouleaux porteurs (R2, R3), un support courbe (31) monté sur l'axe-pivot et s'étendant depuis cet axe-pivot entre deux rouleaux porteurs, contournant l'un des rouleaux et se prolongeant vers le haut dans la ligne de passage depuis un endroit situé en dessous dudit rouleau porteur (R2), une pale (38) montée sur l'axe-pivot pour attaquer fonctionnellement une valve de commande de fluide respective (CV-1-4, etc.) et l'actionner lorsqu'un objet dans la ligne de passage fait tourner le support et l'axe-pivot, le support, l'axe-pivot et la pale assurant un avantage mécanique d'au moins environ 2 par rapport à un actionnement de ladite valve par l'objet, chaque zone étant pourvue d'un dispositif de freinage (25, 26) destiné à attaquer sélectivement au moins un rouleau porteur, la valve de commande à fluide (CV-1-4, etc.) dans chaque zone étant une valve de commande à fluide normalement ouverte et le convoyeur pouvant être mis en oeuvre pour transporter des objets dans une fourchette de poids allant du plus léger au plus lourd, à savoir d'au moins 0,45 kg (1 livre) à 45 kg (100 livres).

5. Circuit de commande et d'actionnement à fluide suivant l'une quelconque des revendications précédentes, caractérisé en ce que l'actionneur à fluide (19) et la valve normalement ouverte (CV) dans chaque zone sont raccordés respectivement à un système à énergie commun fonctionnant à un niveau d'énergie prédéterminé commun et pouvant être actionnés sélectivement à un seul niveau d'énergie prédéterminé commun pour transporter et accumuler une pluralité d'objets discrets qui peuvent varier en poids dans ladite fourchette de poids.

6. Circuit de commande et d'actionnement à fluide selon la revendication 5, dans lequel le système à énergie commune est un système à pression de fluide commun (50, 51).

7. Circuit de commande et d'actionnement à fluide suivant la revendication 6, dans lequel chacune des valves de commande à fluide normalement ouvertes (CV-1-4, etc.) présente une inertie de système prédéterminée due en partie à la pression de fluide commune et est actionnée à l'encontre de l'inertie respective par chacun des objets discrets (L) qui se déplacent le long du convoyeur quel que soit son poids.

8. Circuit de commande et d'actionnement à fluide suivant la revendication 7, dans lequel la pression de fluide commune est fonction du poids des objets plus lourds transportés et accumulés.
